# EUROPÄISCHE PATENTANMELDUNG

(11) **EP 0 563 689 A2**
(43) Veröffentlichungstag der Anmeldung: **06.10.1993**
(21) Anmeldenummer: 93104403.6
(22) Anmeldetag: 18.03.1993
(51) Int. Cl.: F16D 65/097

(54) **Scheibenbremse für ein Kraftfahrzeug**

(30) Priorität: 01.04.1992 DE 4210726; 07.11.1992 DE 4237654
(71) Anmelder: Dr.Ing.h.c. F. Porsche Aktiengesellschaft, D-70435 Stuttgart (DE)
(72) Erfinder: Aydt, Günter, W-7150 Backnang (DE); Martin, Roland, W-7251 Weissach (DE)

(57) **Zusammenfassung**

Bei einer Scheibenbremse (1) für ein Kraftfahrzeug ist im Bremssattel (2) zu beiden Seiten einer Bremsscheibe (3) ein Bremsbelag (4,5) geführt. Der Bremsbelag (4,5) ist einerseits über mindestens eine Halteschraube (7) im Kopf des Bremssattels (2) und andererseits über mindestens einen festgesetzten Führungsbolzen (9) im Grund des Sattels querverschiebbar zum Bremssattel geführt. Zwischen dem Führungsbolzen (9) und dem Bremsbelag (4,5) ist ein radial zum Bolzen federnd vorgespanntes Federelement (10) in einer Aussparung (16) vorgesehen.

## Beschreibung

Die Erfindung bezieht sich auf eine Scheibenbremse für ein Kraftfahrzeug nach dem Oberbegriff des Anspruchs 1.

Bekannte Bremsen weisen zum Führen und Abstützen der im Bremssattel gehaltenen Bremsbeläge zwei Haltestifte auf, die Augen der Beläge durchdringen und im Bremssattel festgesetzt sind. Über eine Kreuzfeder oder dergleichen Befestigungsmittel, welche die Bremsbeläge von oben übergreifen und über die Haltestifte am Bremssattel festgeklemmt sind, werden die Bremsbeläge gegen Umfangskräfte abgestützt.

Aufgabe der Erfindung ist es, eine Scheibenbremse zu schaffen, die eine aus wenigen kostengünstig herzustellenden Bauteilen bestehende Belagführung gewährleistet, die gleichzeitig eine Geräuschdämpfung bewirkt.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß über mindestens einen durch Klebung oder Schraubung fest im Grund des Bremssattels fixierten Führungsbolzen eine Umfangskraftabstützung erfolgt und über ein mit diesem Bolzen in Wirkverbindung stehendes Federelement, beispielsweise einen Federdraht oder eine Blattfeder, eine Niederhaltefeder entfallen kann.

Eine zum Belagwechsel erforderliche Halteschraube im Kopf des Bremssattels ist über einen Gewindeabschnitt in diesem verschraubt und dient ebenfalls zur Umfangskraftabstützung. Sie kann zusätzlich von einer Hülse umgeben sein. Der Kopf der Schraube weist z.B. einen Innensechskant auf, über den dann diese in den Bremssattel über ein Werkzeug eingeschraubt werden kann.

Das Federelement ist in einer entsprechend ausgeformten Aussparung in der Belagrückenplatte eingelegt und kann sich über die gesamte Länge des Bremsbelages erstrecken. Sie ist jeweils endseitig eingespannt und gegenüber dem Führungsbolzen vorgespannt gehalten. Zur Sicherung des Federelements in der Bremsbelagrückenplatte dient ein an der Belagrückenfläche befestigtes Dämpfungsblech, das z.B. über eine Nietung oder Klebung befestigt sein kann. Dieses Dämpfungsblech steht dann direkt mit dem Betätigungskolben in Wirkverbindung und dient auch zur Geräuschabsenkung.

Bei der Anwendung eines Führungsbolzens und einer Halteschraube sind diese Abstützelemente bei einer bevorzugten Ausführungsform in einer gemeinsamen Mittenquerebene des Bremsbelages angeordnet. Sie können aus Geräuschgründen aber auch versetzt in verschiedenen Ebenen oder außermittig angeordnet sein, z.B. bei einer Zwei-Kolben-Festsattelbremse. Der Führungsbolzen ist in einer Quernut gehalten, die die Aussparung für das Federelement kreuzt und dieses in diesem Bereich in Wirkverbindung mit dem Führungsbolzen steht. Durch eine sich von dem Ende des Federelements zur Nut hin erweiternden Aussparung ist ein Federungsfreiraum für das Federelement vorgesehen.

Durch die Ausbildung der Scheibenbremse mit mindestens einer Halteschraube und mindestens einem Führungsbolzen und einem Federelement wird eine kostengünstige Belagführung in einer Scheibenbremse erzielt, die auch auf einen Mehr-Kolben-Sattel übertragbar ist. Es können bei dieser Einrichtung Schachtbleche entfallen und eine Schachtbearbeitung ist nicht mehr erforderlich. Durch die Anordnung des Federelements im Zusammenspiel mit dem Führungsbolzen und dem Dämpfungsblech ist eine Geräuschabsenkung bzw. Vermeidung von Geräuschen bzw. von einem Bremsenquietschen in vorteilhafter Weise möglich.

Nach einer weiteren Ausführung ist der im Bremssattel über eine Einpressung, Gewinde oder dgl. gehaltene Führungsbolzen in einer Quernut des Bremsbelages angeordnet und mit einem diesem Bolzen umgebenden Federungsblech versehen, auf dem der Bremsbelag querverschiebbar und gleichzeitig federnd unterstützt ist. Hierzu ist das Federungsblech mit sich in Längsrichtung des Belages erstreckenden vorgespannten Schenkel versehen, die mindestens in einem Bereich an der Unterkante des Bremsbelages anliegend sind. Hierdurch wird ein federnd vorgespannter Bremsbelag im Schacht des Bremssattels geschaffen.

Damit eine spielfreie Befestigung des Federungsbleches auf dem Bolzen gewährleistet ist, umgreifen aus dem Federungsblech ausgestanzte Zungen den Führungsbolzen umfangsseitig. Bei einer Betätigung der Bremse wird der Bremsbelag auf dem Federungsblech in Querrichtung verschoben, wobei der Führungsbolzen durch seine Befestigung in seiner Position unverändert ist.

Ein Ausführungsbeispiel der Erfindung ist in der Zeichnung dargestellt und wird im folgenden näher beschrieben.

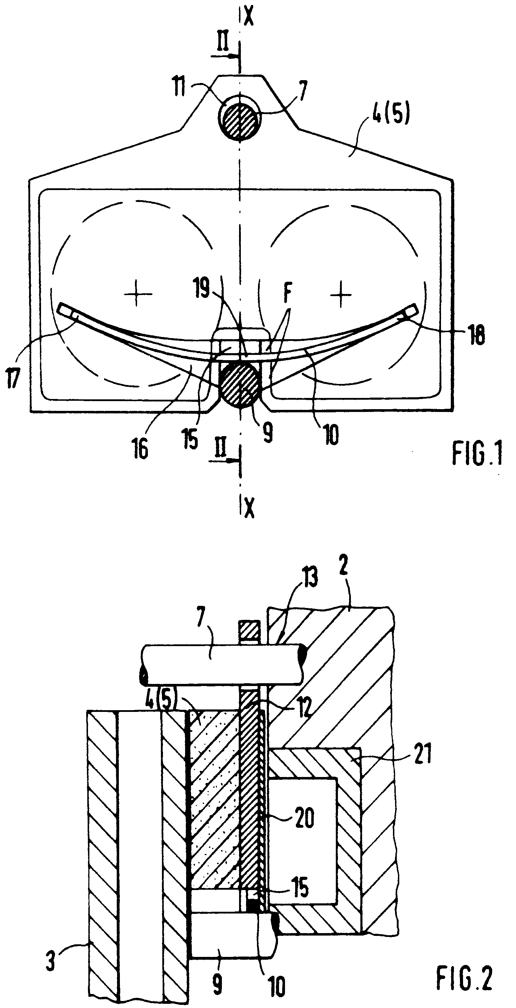

Es zeigt
- Fig. 1: eine Ansicht auf einen Bremsbelag mit Führungsbolzen, Halteschraube und Federelement,
- Fig. 2: einen Schnitt nach der Linie II-II der Fig. 1,

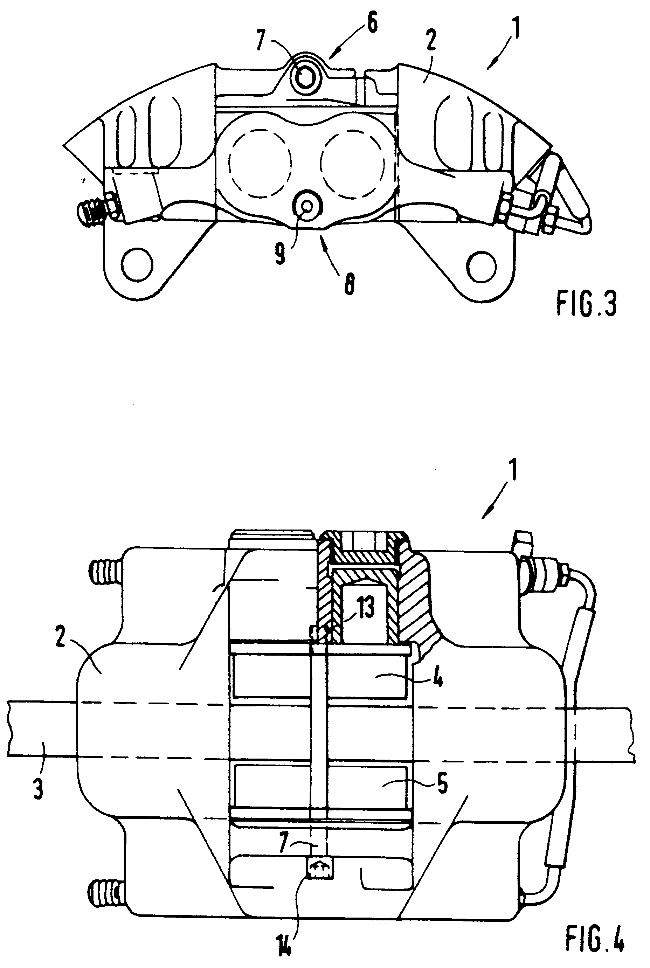

- Fig. 3: einen Bremssattel mit Darstellung des Führungsbolzens und der Halteschraube,
- Fig. 4: eine Draufsicht auf den Bremssattel,
- Fig. 5: eine weitere Ausführung einer Führung eines Bremsbelages auf einem mit einem Federungsblech versehenen Führungsbolzen und
- Fig. 6: eine schaubildliche Darstellung des Führungsbolzens mit Federungsblech.

Die Scheibenbremse 1, beispielsweise in Festsattelbauart, umfasst einen Bremssattel 2, in dem zwei gegenüberstehende und zwischen sich eine Bremsscheibe 3 aufnehmende Bremsbeläge 4 und 5 angeordnet sind. Diese werden im Kopf 6 des Bremssattels 2 über mindestens eine Halteschraube 7 und im Grund 8 des Bremssattels über mindestens einen Führungsbolzen 9 geführt. Mit dem Bolzen 9 ist ein Federelement 10 in Wirkverbindung.

Die Halteschraube 7 ist in einer Bohrung 11 der Belagrückenplatte 12 durchgesteckt angeordnet und im Bremssattel 2 befestigt. Sie weist hierzu einen Gewindeabschnitt 13 auf und der Kopf 14 der Schraube 7 ist mit einem Innensechskant versehen. Auch kann die Schraube 7 mit einer Hülse versehen sein, die sich dann unmittelbar in der Bohrung 11 in der Platte 12 abstützt, was nicht näher gezeigt ist.

Der Führungsbolzen 9 ist in einer Quernut 15 der Belagrückenplatte 12 angeordnet und mit dem Bremssattel 2 durch Klebung oder schraubung verbunden.

Die Halteschraube 7 und der Führungsbolzen 9 sind in einer gemeinsamen Ebene X-X gehalten, die sich quer zum Bremssattel 2 erstreckt.

Das Federelement 10 ist - in bezug auf die Halteschraube 7 - oberhalb des Führungsbolzens 9 in einer Aussparung 16 der Belagrückenplatte 12 angeordnet und mit seinen freien Enden 17 und 18 eingeklemmt. Hierzu ist die Aussparung 16 am Ende der Dicke des Federdrahtes 10 entsprechend ausgeführt. Zur Quernut 15 hin erweitert sich die Aussparung 16 zu beiden Seiten des Federdrahtes 10 in etwa gleichmäßig, so daß ein Freiraum F zu beiden Seiten des Federdrahtes 10 entsteht. Der Federdraht 10 ist gegenüber dem Führungsbolzen 9 derart vorgespannt in der Aussparung 16 gehalten, daß über seinen Mittenbereich 19 ein gewisser Druck auf den Bolzen 9 ausübbar wird.

Zur Sicherung des Federdrahtes 10 im Bremsbelag 4, 5 ist mit der Belagrückenplatte 12 ein Dämpfungsblech 20 verbunden, das zwischen dem Kolben 21 und der Platte 12 vorgesehen ist.

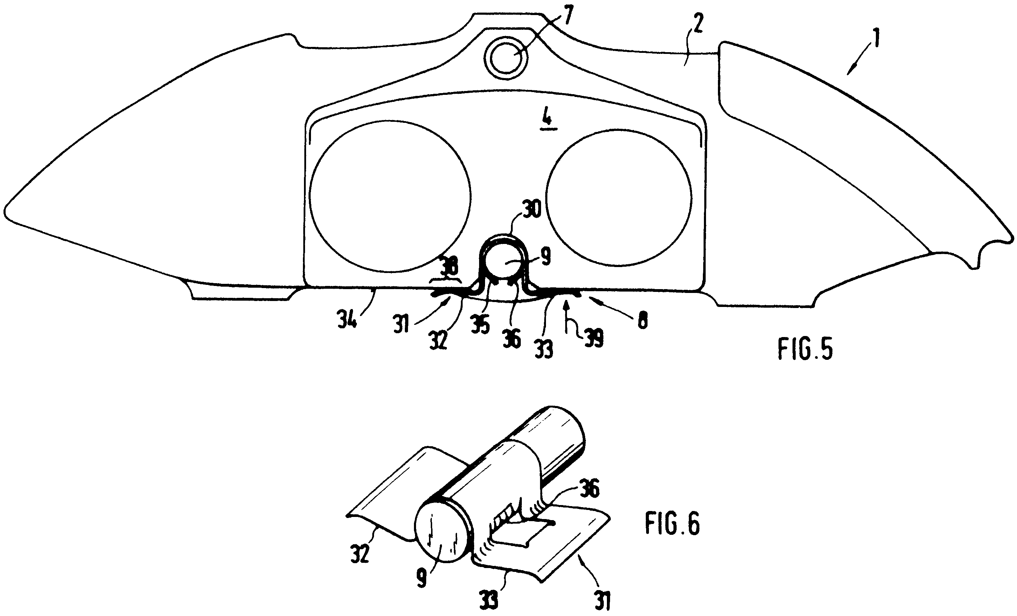

Der Führungsbolzen 9a nach der Ausführung gem. Fig. 5 und 6 trägt ein Federungsblech 31, welches Schenkel 32, 33 umfaßt, die sich in Längsrichtung des Belags 4 erstrecken und die Unterkante 34 dieses Belages stützend untergreifen und der Belag federnd im Schacht des Bremssattels gehalten ist.

Das Federungsblech 31 ist spielfrei auf dem Führungsbolzen 9a über ausgestanzte Zungen 35, 36 gehalten, die den Bolzen 9a umfangsseitig fest umgreifen.

Die Schenkel 32, 33 des Federungsbleches 31 sind gegenüber dem Bremsbelag 4 vorgespannt, wobei mindestens ein Bereich 38 an der Unterkante 34 federnd anliegt, so daß eine vertikale Kraft in Richtung 39 auf den Bremsbelag wirkt. Der Bremsbelag 4 wird hierdurch von innen her abgestützt, wobei eine genaue zwangsgeführte Verschiebung bei Betätigung der Bremse gewährleistet ist. Die Schenkel 32, 33 des Federungsbleches 31 weisen eine definierte Längserstreckung entsprechend den Erfordernissen an der Bremse auf, d.h. sie können sich entweder über die Gesamtlänge des Bremsbelages 4 als auch nur über einen Teil der Länge des Bremsbelags 4 erstrecken.

## Patentansprüche

1. Scheibenbremse für ein Kraftfahrzeug mit einem Bremssattel, in dem zu beiden Seiten einer Bremsscheibe ein Bremsbelag geführt ist, **dadurch gekennzeichnet,** daß der Bremsbelag (4, 5) einerseits über mindestens eine Halteschrauben (7) im Kopf (6) des Bremssattels (2) und andererseits über mindestens einen festgesetzten Führungsbolzen (9, 9a) im Grund (8) des Sattels (2) querverschiebbar zum Bremssattel (2) geführt ist.

2. Scheibenbremse nach Anspruch 1, **dadurch gekennzeichnet,** daß zwischen den Führungsbolzen (9) und dem Bremsbelag (4, 5) ein radial zum Bolzen (9) vorgespanntes Federelement (10) in einer Aussparung (16) vorgesehen ist.

3. Scheibenbremse nach Anspruch 1, **dadurch gekennzeichnet**, daß der Führungsbolzen (9a) in einer Quernut (30) des Bremsbelages (4) angeordnet und auf dem Bolzen (9a) ein Federungsblech (31) gehalten ist, das zwei in Längsrichtung sich erstreckende Schenkel (32, 33) umfaßt, die den Bremsbelag (4) von der Unterseite (34) her federnd abstützen.

4. Scheibenbremse nach Anspruch 1, **dadurch gekennzeichnet**, daß das Federungsblech (31) spielfrei auf dem Bolzen (9a) von ausgestanzten Zungen (35, 36) beidseitig umgriffen ist und der Bremsbelag (4) auf Federungsblech (31) querverschiebbar geführt ist.

5. Scheibenbremse nach den Ansprüchen 1, 2, 3 und 4, **dadurch gekennzeichnet,** daß die Schenkel (32, 33) gegenüber der Unterseite (34) des Bremsbelages vorgespannt sind und mindestens ein Bereich (38) der Schenkel (32, 33) anliegend ist und eine vertikale Kraft in Richtung (39) auf den Bremsbelag (4) ausübend, auf dem Bolzen (9) gehalten sind.

6. Scheibenbremse nach Anspruch 1, **dadurch gekennzeichnet**, daß das Federelement (10) einen Federdraht umfasst, der mit seinem freien Enden (17, 18) jeweils in einer Aussparung (16) einer Belagrückenplatte (12) eingespannt ist und mit seinem vorgewölbten Mittenbereich (19) am unteren Führungsbolzen (9) anliegt.

7. Scheibenbremse nach den Ansprüchen 1, 2 oder 6, **dadurch gekennzeichnet**, daß das Federelement (10) in einer sich in einer Längsebene der Belagrückenplatte (12) erstreckenden Aussparung (16) angeordnet ist, die von einer querverlaufenden Nut (15) zur Aufnahme des Führungsbolzens (9) unterbrochen ist.

8. Scheibenbremse nach den Ansprüchen 1, 2, 6 oder 7, **dadurch gekennzeichnet**, daß die Aussparung (16) sich vom endseitigen Einspannbereich des Federdrahtes (10) bis zur Nut (15) hin erweitert und einen freien Raum (F) für den Federdraht (10) zu jeder Seite ausbildet.

9. Scheibenbremse nach Anspruch 1 oder 2, **dadurch gekennzeichnet**, daß die Halteschraube (7) an ihren dem Kopf (14) abgekehrten Ende einen Gewindeabschnitt (13) aufweist und im Bremssattel (2) lösbar eingeschraubt gehalten ist.

10. Scheibenbremse nach den Ansprüchen 1, 2 und 9, **dadurch gekennzeichnet**, daß die Halteschraube (7) von einer Hülse umgeben ist, die sich über die Länge der Schraube erstreckt und in Bohrungen (11) der jeweiligen Belagplatten (12) des Bremsbelags (4, 5) abstützt.

11. Scheibenbremse nach Anspruch 1, 2, 9 oder 10, **dadurch gekennzeichnet**, daß die Halteschraube (7) einen Kopf (14) mit einem Innensechskant aufweist.

12. Scheibenbremse nach Anspruch 1 oder 2, **dadurch gekennzeichnet**, daß die Aussparung (16) über ein an der Rückseite der Belagplatte (12) angeordnetes Dämpfungsblech (20) abgedeckt ist.
